# EUROPÄISCHE PATENTANMELDUNG

(11) **EP 3 705 746 A1**
(43) Veröffentlichungstag der Anmeldung: **09.09.2020**
(21) Anmeldenummer: 20157978.6
(22) Anmeldetag: 18.02.2020
(51) Int. Cl.: F16F 15/121, F16F 15/123, F16F 15/12

(54) **KUPPLUNGSVORRICHTUNG ZUR DREHELASTISCHEN DREHMOMENTÜBERTRAGUNG**

(30) Priorität: 07.03.2019 DE 102019203109
(71) Anmelder: Stromag GmbH, 59425 Unna (DE)
(72) Erfinder: Böhm, Peter, 59423 Unna (DE); Faust, Friedrich, 59229 Ahlen (DE); Mikolajczyk, Olaf, 59425 Unna (DE); Spink, Daniela, 59423 Unna (DE)
(74) Vertreter: Patentanwälte Ruff, Wilhelm, Beier, Dauster & Partner mbB

(57) **Zusammenfassung**

1. Kupplungsvorrichtung zur drehelastischen Drehmomentübertragung.
2.1 Eine derartige Kupplungsvorrichtung aufweisend eine in Bezug auf eine Kupplungsdrehachse - radial innen liegende Kupplungsnabe, die einer Nabenseite der Kupplungsvorrichtung zugeordnet ist, einen radial außen liegenden Kupplungsflansch, der einer Flanschseite der Kupplungsvorrichtung zugeordnet ist, eine Federeinrichtung, mittels derer die Nabenseite und die Flanschseite in Umfangsrichtung federelastisch drehmomentübertragend gegeneinander abgestützt sind, wofür die Federeinrichtung wenigstens ein Federelement aufweist, das in Umfangsrichtung einends an einem dem Kupplungsflansch zugeordneten ersten Stützbauteil und andernends an einem der Kupplungsnabe zugeordneten zweiten Stützbauteil abgestützt ist, und aufweisend eine Anschlageinrichtung, mittels derer die Nabenseite und die Flanschseite - bei Erreichen eines festgelegten maximalen Verdrehwinkels zwischen der Nabenseite und der Flanschseite - in Umfangsrichtung formschlüssig drehmomentübertragend gegeneinander abgestützt sind, ist bekannt.
2.2 Erfindungsgemäß weist die Anschlageinrichtung wenigstens ein einstückig mit dem ersten Stützbauteil ausgebildetes erstes Formschlusselement und wenigstens ein einstückig mit dem zweiten Stützbauteil ausgebildetes zweites Formschlusselement auf, wobei das erste Formschlusselement und das zweite Formschlusselement bei Erreichen des maximalen Verdrehwinkels formschlüssig zusammenwirken.
2.3 Verwendung für einen Antriebsstrang.

## Beschreibung

Die Erfindung betrifft eine Kupplungsvorrichtung zur drehelastischen Drehmomentübertragung, aufweisend eine - in Bezug auf eine Kupplungsdrehachse - radial innen liegende Kupplungsnabe, die einer Nabenseite der Kupplungsvorrichtung zugeordnet ist, einen radial außen liegenden Kupplungsflansch, der einer Flanschseite der Kupplungsvorrichtung zugeordnet ist, eine Federeinrichtung, mittels derer die Nabenseite und die Flanschseite in Umfangsrichtung federelastisch drehmomentübertragend gegeneinander abgestützt sind, wofür die Federeinrichtung wenigstens ein Federelement aufweist, das in Umfangsrichtung einends an einem dem Kupplungsflansch zugeordneten ersten Stützbauteil und andernends an einem der Kupplungsnabe zugeordneten zweiten Stützbauteil abgestützt ist, und aufweisend eine Anschlageinrichtung, mittels derer die Nabenseite und die Flanschseite - bei Erreichen eines festgelegten maximalen Verdrehwinkels zwischen der Nabenseite und der Flanschseite - in Umfangsrichtung formschlüssig drehmomentübertragend gegeneinander abgestützt sind.

Eine derartige Kupplungsvorrichtung ist im Bereich der Antriebstechnik allgemein bekannt und zur drehelastischen Drehmomentübertragung in einem Antriebsstrang vorgesehen. Die bekannte Kupplungsvorrichtung weist eine radial innen liegende Kupplungsnabe und einen radial außen liegenden Kupplungsflansch auf. Der Kupplungsflansch und die Kupplungsnabe sind mittels einer Federeinrichtung in Umfangsrichtung federelastisch drehmomentübertragend gegeneinander abgestützt. Hierzu sieht die Federeinrichtung der bekannten Kupplungsvorrichtung mehrere in Umfangsrichtung benachbart angeordnete Druckfedern vor, die jeweils einends an einem dem Kupplungsflansch zugeordneten ersten Stützbauteil und jeweils andernends an einem der Kupplungsnabe zugeordneten zweiten Stützbauteil abgestützt sind. Um die elastische Verdrehbarkeit zwischen Kupplungsflansch und Kupplungsnabe zu begrenzen, ist eine Anschlageinrichtung vorgesehen. Bei der bekannten Kupplungsvorrichtung weist die Anschlageinrichtung mehrere separat von den übrigen Bauteilen und/oder Abschnitten der Kupplungsvorrichtung gefertigte und in einem separaten Montageschritt zwischen der Nabenseite und der Flanschseite montierte Anschlagelemente auf. Bei Erreichen eines konstruktiv festgelegten maximalen Verdrehwinkels zwischen dem Kupplungsflansch und der Kupplungsnabe wirken die Anschlagelemente als formschlüssiger Anschlag.

Aufgabe der Erfindung ist es, eine Kupplungsvorrichtung der eingangs genannten Art bereitzustellen, die einen vereinfachten Aufbau aufweist und eine vereinfachte Fertigung sowie Montage ermöglicht.

Diese Aufgabe wird dadurch gelöst, dass die Anschlageinrichtung wenigstens ein einstückig mit dem ersten Stützbauteil ausgebildetes erstes Formschlusselement und wenigstens ein einstückig mit dem zweiten Stützbauteil ausgebildetes zweites Formschlusselement aufweist, wobei das erste Formschlusselement und das zweite Formschlusselement bei Erreichen des maximalen Verdrehwinkels formschlüssig zusammenwirken. Durch die erfindungsgemäße Lösung kann auf separat gefertigte und in einem gesonderten Montageschritt zu montierende Anschlagelemente verzichtet werden. Stattdessen weist die Anschlageinrichtung das wenigstens eine erste Formschlusselement und das wenigstens eine zweite Formschlusselement auf, wobei die Formschlusselemente jeweils einstückig an dem ersten bzw. zweiten Stützbauteil ausgebildet sind. Hierdurch können ein vereinfachter Aufbau der Kupplungsvorrichtung sowie eine vereinfachte Fertigung und Montage derselben erreicht werden. Die Kupplungsvorrichtung ist vorzugsweise zur Übertragung eines Drehmoments zwischen einem Getriebe und einem Motor eines Antriebsstrangs vorgesehen. Dabei kann die Kupplungsnabe insbesondere zur drehmomentfesten Verbindung mit einer Eingangswelle eines Getriebes oder einer Ausgangswelle eines Antriebsmotors vorgesehen sein. Dementsprechend kann der Kupplungsflansch insbesondere zur drehmomentfesten Verbindung mit einem Eingangsflansch eines Getriebes oder einem Ausgangsflansch eines Motors vorgesehen sein. Die Federeinrichtung bewirkt eine in Umfangsrichtung federelastische Verbindung zwischen der Flanschseite und der Nabenseite, so dass antriebsbedingte, ruckartige Spitzen des zu übertragenden Drehmomentes nicht etwa starr - und damit ruckartig -, sondern stattdessen drehelastisch abgefedert zwischen der Flanschseite und der Nabenseite übertragen werden. Hierzu sind die Nabenseite und die Kupplungsseite mittels der Federeinrichtung federelastisch gegeneinander verdrehbar. Zur federelastischen Abstützung zwischen der Nabenseite und der Flanschseite sieht die Federeinrichtung das wenigstens eine Federelement vor. Das wenigstens eine Federelement ist vorzugsweise eine Druckfeder. Vorzugsweise weist die Federeinrichtung mehrere gleichartige und in Umfangsrichtung zueinander beabstandet angeordnete Federelemente auf, die jeweils an dem ersten Stützbauteil und an dem zweiten Stützbauteil abgestützt sind. Die Anschlageinrichtung gestattet lediglich eine begrenzte federelastische Verdrehbarkeit zwischen der Nabenseite und der Flanschseite. Der maximale Verdrehwinkel ist mittels der Anschlageinrichtung konstruktiv festgelegt. Das erste Stützbauteil ist dem Kupplungsflansch zugeordnet und kann insbesondere ein aus Blech gefertigtes Blechbauteil oder ein Gussbauteil sein. Das zweite Stützbauteil ist der Kupplungsnabe zugeordnet und kann insbesondere ein aus Blech gefertigtes Blechbauteil oder ein Gussbauteil sein. Das erste Stützbauteil kann lösbar oder unlösbar mit dem Kupplungsflansch zusammengefügt und/oder einstückig an dem Kupplungsflansch ausgebildet sein. Das zweite Stützbauteil kann lösbar oder unlösbar mit der Kupplungsnabe zusammengefügt oder einstückig mit dieser ausgebildet sein. Sofern es sich bei dem betreffenden Stützbauteil um ein Blechbauteil handelt, kann das betreffende Formschlusselement insbesondere ein mittels Umformens ausgebildeter Blechabschnitt oder eine aus dem Blechbauteil herausgetrennte Öffnung sein. Sofern es sich bei dem betreffenden Stützbauteil um ein Gussbauteil handelt, kann das betreffende Formschlusselement insbesondere durch einen vorspringenden Gussabschnitt oder durch eine Aussparung des Gussbauteils gebildet sein.

In Ausgestaltung der Erfindung ist das erste Stützbauteil und/oder das zweite Stützbauteil in Form eines aus Blech gefertigten Blechbauteils ausgebildet, und das erste Formschlusselement und/oder das zweite Formschlusselement ist in Form eines umgeformten Blechabschnittes ausgebildet. Das erste Formschlusselement ist vorzugsweise komplementär zu dem zweiten Formschlusselement ausgebildet und kann dementsprechend insbesondere in Form einer Öffnung, einer Ausnehmung, einer Nut oder dergleichen ausgebildet sein, die bei Erreichen des maximalen Verdrehwinkels formschlüssig mit dem umgeformten Blechabschnitt zusammenwirkt. Der umgeformte Blechabschnitt kann insbesondere in Form einer Lasche, eines Zinkens, einer Auswölbung oder dergleichen ausgebildet sein. Durch diese Ausgestaltung der Erfindung können ein besonders einfacher Aufbau sowie eine besonders einfache Fertigung und Montage der Kupplungsvorrichtung erreicht werden.

In weiterer Ausgestaltung der Erfindung sind mehrere in Umfangsrichtung beabstandet angeordnete erste Formschlusselemente und mehrere in Umfangsrichtung beabstandet angeordnete zweite Formschlusselemente vorgesehen. Diese Ausgestaltung der Erfindung gewährleistet eine besonders zuverlässige und funktionssichere Begrenzung des maximalen Verdrehwinkels. Vorzugsweise wirkt jeweils eines der ersten Formschlusselemente mit jeweils einem der zweiten Formschlusselemente zusammen. Vorzugsweise sind wenigstens jeweils zwei, bevorzugt wenigstens jeweils vier, besonders bevorzugt jeweils wenigstens acht, erste Formschlusselemente und zweite Formschlusselemente vorgesehen.

In weiterer Ausgestaltung der Erfindung ist das erste Stützbauteil ein erstes Käfigblech einer Käfiganordnung zur Halterung des wenigstens eines Federelements, wobei das erste Käfigblech an seinem Außenumfang drehmomentfest mit dem Kupplungsflansch zusammengefügt ist, und das zweite Stützbauteil ist ein Stützblech, das an seinem Innenumfang drehmomentfest mit der Kupplungsnabe zusammengefügt ist. Das Stützblech weist vorzugsweise eine kreisringförmige Grundform auf und ist radial von der Kupplungsnabe nach außen erstreckt. Das Stützblech kann eine in axialer Richtung erstreckte Ausnehmung aufweisen, in der das wenigstens eine Federelement angeordnet ist. Das Stützblech dient insbesondere einer Drehmomentübertragung zwischen der Federeinrichtung und der Kupplungsnabe. Das erste Käfigblech dient insbesondere einer formschlüssigen Halterung des wenigstens einen Federelements und einer Drehmomentübertragung zwischen der Federeinrichtung und dem Kupplungsflansch. Das erste Käfigblech kann an seinem Außenumfang lösbar oder unlösbar mit dem Kupplungsflansch zusammengefügt oder einstückig mit demselben ausgebildet sein. Dementsprechend kann das Stützblech an seinem Innenumfang lösbar oder unlösbar mit der Kupplungsnabe zusammengefügt oder einstückig mit derselben ausgebildet sein. Durch die Anordnung des ersten Formschlusselements an dem ersten Käfigblech und des zweiten Formschlusselements an dem Stützblech wird ein nochmals vereinfachter Aufbau der Kupplungsvorrichtung erreicht. Zudem ergeben sich besondere Vorteile im Hinblick auf die Fertigung und die Montage der Kupplungsvorrichtung.

In weiterer Ausgestaltung der Erfindung ist das wenigstens eine zweite Formschlusselement eine aus dem Stützblech herausgetrennte axiale Öffnung, und das wenigstens eine erste Formschlusselement ist eine in die axiale Öffnung erstreckte umgebogene Lasche des ersten Käfigblechs. Die Lasche ragt axial in die Öffnung und gelangt bei Erreichen des maximalen Verdrehwinkels seitlich in Umfangsrichtung zur Anlage an einer Innenkontur der Öffnung. Auf diese Weise wird eine besonders einfache und zuverlässige formschlüssige Verdrehwinkelbegrenzung und Drehmomentübertragung erreicht.

In weiterer Ausgestaltung der Erfindung weist die Käfiganordnung ein zweites Käfigblech auf, das auf einer dem ersten Käfigblech abgewandten Seite des Stützblechs angeordnet und mit wenigstens einer weiteren Lasche versehen ist, die in eine weitere axiale Öffnung des Stützblechs erstreckt ist. Die weitere Lasche des zweiten Käfigblechs ist vorzugsweise gleichartig zu der umgebogenen Lasche des ersten Käfigblechs ausgebildet und in Axialrichtung entgegengesetzt zu dieser orientiert. Das zweite Käfigblech ist in Axialrichtung zu dem ersten Käfigblech beabstandet, wobei das Stützblech vorzugsweise zwischen den beiden Käfigblechen angeordnet ist. Bei einer solchen Ausgestaltung der Erfindung kann das Stützblech auch als Mittelblech bezeichnet werden. Ein besonders einfacher Aufbau kann erreicht werden, wenn das erste Käfigblech und das zweite Käfigblech - in Bezug auf eine Axialebene - spiegelsymmetrisch ausgebildet sind. Diese Ausgestaltung der Erfindung ermöglicht einen nochmals vereinfachten Aufbau. Außerdem werden die Fertigung und die Montage zusätzlich vereinfacht.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt sind.
- Fig. 1: zeigt in schematischer Perspektivdarstellung eine Ausführungsform einer erfindungsgemäßen Kupplungsvorrichtung,
- Fig. 2: die Kupplungsvorrichtung nach Fig. 1 in einer entlang einer Kupplungsdrehachse gerichteten Ansicht unter Einblendung verdeckter Linien und freigeschnittener Bereiche,
- Fig. 3: die Kupplungsvorrichtung nach den Fig. 1 und 2 in einer vergrößerten, teilweise abgeschnittenen Schnittdarstellung entlang einer Schnittlinie A-A gemäß Fig. 2,
- Fig. 4: die Kupplungsvorrichtung nach den Fig. 1 bis 3 in einer der Fig. 3 entsprechenden Darstellungsweise entlang einer Schnittlinie B-B nach Fig. 2 und

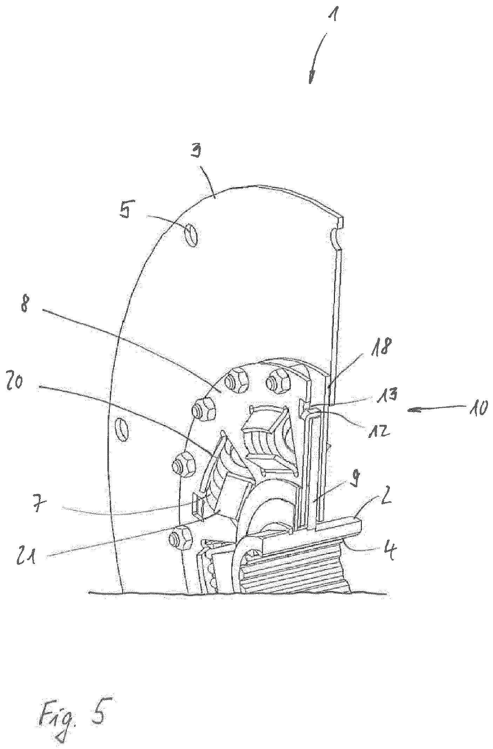

- Fig. 5: die Kupplungsvorrichtung nach den Fig. 1 bis 4 in einer teilweise abgeschnittenen und perspektivisch gedrehten Schnittdarstellung.

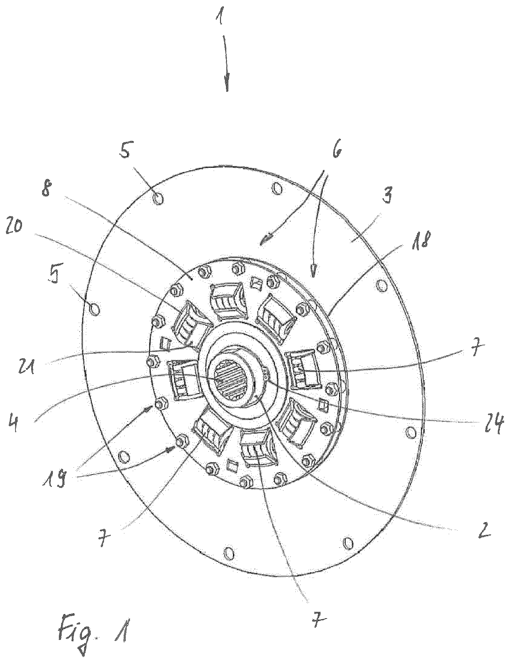

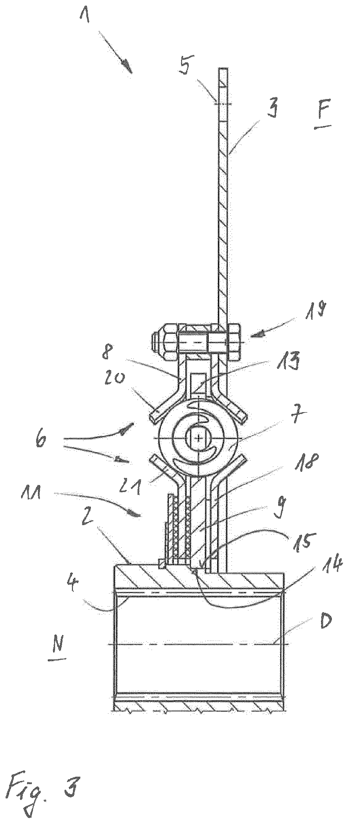

Gemäß Fig. 1 ist eine Kupplungsvorrichtung 1 zur drehelastischen Drehmomentübertragung für einen Antriebsstrang vorgesehen und weist eine - in Bezug auf eine Kupplungsdrehachse D (Fig. 3) - radial innen liegende Kupplungsnabe 2 und einen radial außen liegenden Kupplungsflansch 3 auf.

Die Kupplungsnabe 2 ist einer Nabenseite N der Kupplungsvorrichtung 1 zugeordnet und vorliegend zur drehmomentfesten Verbindung mit einer Getriebeeingangswelle des Antriebsstrangs vorgesehen. Zu diesem Zweck weist die Kupplungsnabe 2 vorliegend eine an einem Innenumfang ausgebildete Vielverzahnung 4 auf. Die Vielverzahnung 4 ist zur formschlüssigen Verbindung mit einer komplementären Vielverzahnung der besagten Getriebeeingangswelle vorgesehen.

Der Kupplungsflansch 3 ist einer Flanschseite F der Kupplungsvorrichtung 1 zugeordnet und vorliegend zur drehmomentfesten Verbindung mit einem Ausgangsflansch eines Antriebsmotors des Antriebsstrangs vorgesehen. Zu diesem Zweck weist der Kupplungsflansch 3 vorliegend mehrere in Umfangsrichtung beabstandet angeordnete Bohrungen 5 auf. Die Bohrungen 5 sind jeweils zur Aufnahme eines Befestigungsmittels vorgesehen.

Die Kupplungsvorrichtung 1 weist zudem eine Federeinrichtung 6 auf, mittels derer die Nabenseite N und die Flanschseite F in Umfangsrichtung federelastisch drehmomentübertragend gegeneinander abgestützt sind. Die Federeinrichtung 6 weist vorliegend 8 in Umfangsrichtung gleichmäßig beabstandet angeordnete Federelemente 7 auf. Dies ist jedoch nicht zwingend. Bei einer nicht dargestellten Ausführungsform kann die Federeinrichtung auch eine hiervon abweichende Mehrzahl oder gar lediglich ein einziges Federelement aufweisen.

Die Federelemente 7 sind in Umfangsrichtung jeweils einends an einem dem Kupplungsflansch 3 zugeordneten ersten Stützbauteil 8 abgestützt. Andernends sind die Federelemente 7 in Umfangsrichtung jeweils an einem der Kupplungsnabe 2 zugeordneten zweiten Stützbauteil 9 abgestützt.

Die Federeinrichtung 6 gewährleistet, dass das zwischen der Flanschseite F und der Nabenseite N zu übertragende Drehmoment bei antriebsbedingten Laufunruhen und/oder Drehmomentspitzen nicht etwa ruckartig, sondern elastisch abgefedert übertragen wird. Dementsprechend gestattet die Federeinrichtung 6 einen nicht näher bezeichneten elastischen Verdrehwinkel zwischen der Flanschseite F und der Nabenseite N bzw. zwischen dem Kupplungsflansch 3 und der Kupplungsnabe 2.

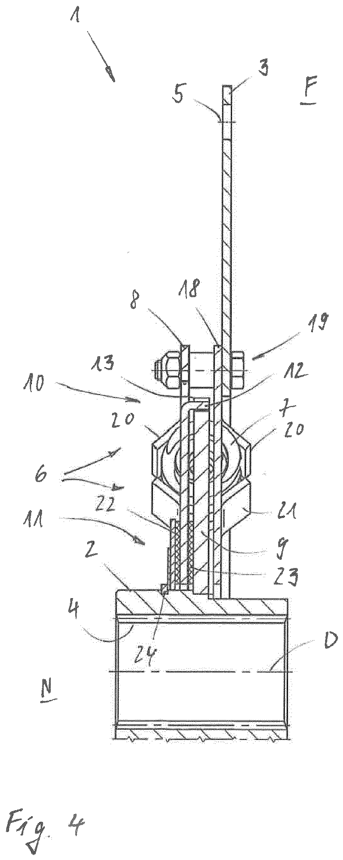

Um den Verdrehwinkel zu begrenzen und eine mögliche Überbeanspruchung der Federelemente 7 durch eine zu starke Verdrehung zu vermeiden, ist eine Anschlageinrichtung 10 vorgesehen (Fig. 4), mittels derer die Nabenseite N und die Flanschseite F - bei Erreichen eines konstruktiv festgelegten maximalen Verdrehwinkels - in Umfangsrichtung formschlüssig drehmomentübertragend gegeneinander abgestützt sind.

Vorliegend weist die Kupplungsvorrichtung 1 zudem eine Reibeinrichtung 11 auf. Mittels der Reibeinrichtung 11 sind die Flanschseite F und die Nabenseite N in Umfangsrichtung reibschlüssig drehmomentübertragend gegeneinander abgestützt. Diese zusätzlich reibschlüssige Abstützung gewährleistet eine Dämpfung der besagten Laufunruhen und/oder Drehmomentspitzen. Die vorliegend vorgesehene Reibeinrichtung 11 ist jedoch nicht zwingend. Bei einer nicht dargestellten Ausführungsform ist eine solche Reibeinrichtung nicht vorgesehen.

Die Anschlageinrichtung 10 weist vorliegend wenigstens ein einstückig mit dem ersten Stützbauteil 8 ausgebildetes erstes Formschlusselement 12 und wenigstens ein einstückig mit dem zweiten Stützbauteil 9 ausgebildetes zweites Formschlusselement 13 auf. Bei Erreichen des maximalen Verdrehwinkels zwischen Flanschseite F und Nabenseite N wirken das erste Formschlusselement 12 und das zweite Formschlusselement 13 zur Drehmomentübertragung und Verdrehwinkelbegrenzung formschlüssig zusammen.

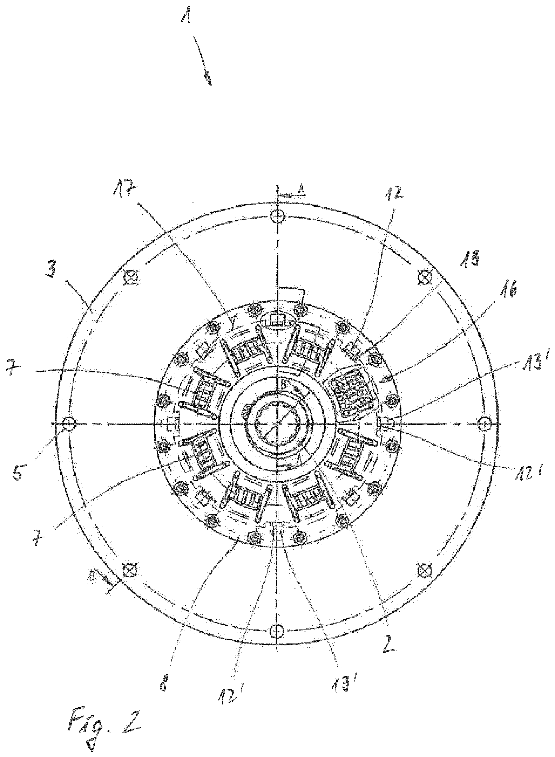

Vorliegend weist die Anschlageinrichtung 10 mehrere in Umfangsrichtung beabstandet angeordnete erste Formschlusselemente 12 und dementsprechend mehrere in Umfangsrichtung beabstandet angeordnete zweite Formschlusselemente 13 auf (Fig. 1, 2). Die ersten Formschlusselemente 12 und die zweiten Formschlusselemente 13 sind jeweils gleichartig gestaltet, wobei jeweils ein erstes Formschlusselement 12 mit jeweils einem zweiten Formschlusselement 13 zusammenwirkt. Zur Vermeidung von Wiederholungen wird nachfolgend lediglich auf eines der ersten Formschlusselemente 12 und eines der zweiten Formschlusselemente 13 im Detail Bezug genommen, wobei die diesbezügliche Offenbarung jeweils in entsprechender Weise für die verbleibenden ersten Formschlusselemente 12 und die verbleibenden zweiten Formschlusselemente 13 gelten kann.

Das erste Stützbauteil 8 dient einer drehfesten Drehmomentübertragung zwischen dem Kupplungsflansch 3 und der Federeinrichtung 6. Dementsprechend dient das zweite Stützbauteil 9 einer drehfesten Drehmomentübertragung zwischen der Federeinrichtung 6 und der Kupplungsnabe 2. Durch die jeweils einstückige Ausbildung der Formschlusselemente 12, 13 an dem betreffenden Stützbauteil 8, 9 können ein besonders einfacher konstruktiver Aufbau sowie eine einfache Fertigung und Montage der Kupplungsvorrichtung 1 erreicht werden.

Vorliegend ist sowohl das erste Stützbauteil als auch das zweite Stützbauteil jeweils in Form eines aus Blech gefertigten Blechbauteils 8, 9 ausgebildet. Die Blechbauteile 8, 9 sind jeweils aus einem nicht näher bezeichneten Stahlblech gefertigt. Das erste Formschlusselement ist dabei ein noch näher zu beschreibender umgeformter Blechabschnitt 12 des Blechbauteils 8. Das zweite Formschlusselement ist vorliegend eine aus dem zweiten Blechbauteil 9 herausgetrennte Öffnung 13, in die der umgeformte Blechabschnitt 12 axial eingreift. Bei Erreichen des maximalen Verdrehwinkels gelangen der umgeformte Blechabschnitt 12 und die Öffnung 13 in Umfangsrichtung formschlüssig zur Anlage aneinander, so dass ein weitergehendes elastisch gefedertes Verdrehen zwischen der Flanschseite F und der Nabenseite N verhindert ist.

Das der Kupplungsnabe 2 zugeordnete zweite Stützbauteil bzw. das Blechbauteil 9 ist vorliegend ein Stützblech, das auch als Mittelblech 9 bezeichnet werden kann. Das Mittelblech 9 weist vorliegend eine kreisringförmige Grundform auf und ist an seinem Innenumfang 14 stoffschlüssig mit einem Außenumfang 15 der Kupplungsnabe 2 zusammengefügt. Als Fügeverbindung zwischen der Kupplungsnabe 2 und dem Mittelblech 9 ist vorliegend eine nicht näher bezeichnete Schweißverbindung vorgesehen. Das Mittelblech 9 ist radial von der Kupplungsnabe 2 nach außen erstreckt und weist mehrere in Umfangsrichtung benachbart angeordnete Aussparungen 16 auf (Fig. 2), in denen jeweils eines der Federelemente 7 aufgenommen ist. Die Aussparungen 16 sind in Axialrichtung erstreckt und auf eine Außenkontur der Federelemente 7 abgestimmt, so dass diese in Umfangsrichtung stirnendseitig an den Aussparungen 16 gehalten sind.

Das zweite Formschlusselement ist vorliegend eine axiale Öffnung 13 (Fig. 2), die an einem Außenumfang 17 des Mittelblechs 19 in Form eines radialen Rücksprungs ausgebildet ist. Bei einer nicht dargestellten Ausführungsform kann die axiale Öffnung 13 stattdessen in Form einer allseitig berandeten Durchgangsöffnung ausgebildet sein.

Das dem Kupplungsflansch 3 zugeordnete erste Stützbauteil ist vorliegend ein erstes Käfigblech 8 eine Käfiganordnung 8, 18, die insbesondere einer axialen Halterung der Federelemente 7 dient. Das erste Käfigblech 8 ist axial zu dem Mittelblech 9 versetzt angeordnet und weist eine kreisringförmige Grundform auf. An einem nicht näher bezeichneten Außenumfang ist das erste Käfigblech 8 mittels mehrerer in Umfangsrichtung benachbart angeordneter Schraubverbindungen 19 (Fig. 3, 4) drehfest mit dem Kupplungsflansch 3 verbunden.

Das erste Käfigblech 8 weist mehrere in Umfangsrichtung benachbart angeordnete Biegeabschnitte 20, 21 auf. Die Biegeabschnitte 20, 21 sind in axialer Richtung aufgebogen und dienen einer formschlüssigen axialen Halterung der Federelemente 7.

Das erste Formschlusselement ist vorliegend in Form einer umgebogenen Lasche 12 an dem ersten Käfigblech 8 ausgebildet. Die umgebogene Lasche 12 ist in Axialrichtung erstreckt und ragt auf die vorbeschriebene Weise in die axiale Öffnung 13 des Mittelblechs 9. Die umgebogene Lasche 12 ist vorliegend mittels eines bereichsweisen Auftrennens des ersten Käfigblechs 8 gebildet, wobei der bereichsweise aufgetrennte Bereich in Axialrichtung aus den übrigen Abschnitten des ersten Käfigblechs 8 unter Ausbildung der Lasche 12 ausgebogen ist.

Die Käfiganordnung 8, 18 ist vorliegend - in Bezug auf das Mittelblech 9 - im Wesentlichen spiegelsymmetrisch ausgebildet, so dass ein zweites Käfigblech 18 vorgesehen ist. Das zweite Käfigblech 18 weist ebenso wie das erste Käfigblech 8 nicht näher bezeichnete Biegeabschnitte 20, 21 auf, die zusammen mit den Biegeabschnitten 20, 21 des ersten Käfigblechs 8 Aufnahmeaussparungen zur Aufnahme jeweils eines der Federelemente 7 bilden. Das zweite Käfigblech 18 ist an seinem Außenumfang mittels der Schraubverbindungen 19 drehfest mit dem Kupplungsflansch 3 und dem ersten Käfigblech 8 verbunden.

Anhand Fig. 2 ist ersichtlich, dass auch das zweite Käfigblech 18 vorliegend erste Formschlusselemente in Form jeweils einer umgebogenen Lasche 12' aufweist. Die umgebogenen Laschen 12' des zweiten Käfigblechs 18 ragen axial entgegengesetzt zu den umgebogenen Laschen 12 des ersten Käfigblechs 8 in entsprechende axiale Öffnungen 13' des Mittelblechs 9. Dabei sind die Laschen 12 des ersten Käfigblechs 8 und die Laschen 12' des zweiten Käfigblechs 18 in Umfangsrichtung alternierend angeordnet, so dass auf eine Lasche 12 des ersten Käfigblechs 8 eine Lasche 12' des zweiten Käfigblechs 18 folgt und umgekehrt.

Die Federelemente 7 sind vorliegend jeweils in Form einer aus Metall gefertigten und auf Druck zu beanspruchenden Wendelfeder ausgebildet. Eine solche Gestaltung der Federelemente 7 ist jedoch nicht zwingend. Bei einer nicht dargestellten Ausführungsform können die Federelemente 7 stattdessen aus einem elastomeren Material in einer nicht-wendelförmigen, massiven Blockgestaltung ausgebildet sein.

Die Reibeinrichtung 11 ist vorliegend zwischen dem Mittelblech 9 und dem ersten Käfigblech 8 ausgebildet und weist kreisringförmige erste und zweite Reibelemente 23, 22 auf. Das erste Reibelement 23 ist in axialer Richtung zwischen einer nicht näher bezeichneten axialen Stirnfläche des Mittelblechs 9 und einer dem Mittelblech 9 zugewandten axialen Stirnfläche des ersten Käfigblechs 8 angeordnet. Demgegenüber ist das zweite Reibelement 22 an einer dem Mittelblech 9 abgewandten, in axialer Richtung außen liegenden Stirnfläche des ersten Käfigblechs 8 angeordnet und mittels einer mit einem axialen Sicherungsring 24 gesicherten und ansonsten nicht näher bezeichneten Federeinheit in Axialrichtung federkraftbelastet. Hierdurch ist die Reibeinrichtung 11 reibschlüssig vorgespannt. Bei einer elastischen Verdrehung zwischen der Flanschseite F und der Nabenseite N bewirkt die Reibeinrichtung 11 infolge der reibschlüssigen Kontaktierung zwischen dem ersten Käfigblech 8 einerseits und dem Mittelblech 9 andererseits eine Dämpfung der Federbeweglichkeit der Federeinrichtung 10. Wie eingangs erwähnt, sind weder die Reibeinrichtung 11 noch deren spezifische Ausgestaltung zwingend.

## Patentansprüche

1. Kupplungsvorrichtung (1) zur drehelastischen Drehmomentübertragung, aufweisend
- eine - in Bezug auf eine Kupplungsdrehachse (D) - radial innen liegende Kupplungsnabe (2), die einer Nabenseite (N) der Kupplungsvorrichtung (1) zugeordnet ist,
- einen radial außen liegenden Kupplungsflansch (3), der einer Flanschseite (F) der Kupplungsvorrichtung (1) zugeordnet ist,
- eine Federeinrichtung (6), mittels derer die Nabenseite (N) und die Flanschseite (F) in Umfangsrichtung federelastisch drehmomentübertragend gegeneinander abgestützt sind, wofür die Federeinrichtung (6) wenigstens ein Federelement (7) aufweist, das in Umfangsrichtung einends an einem dem Kupplungsflansch (3) zugeordneten ersten Stützbauteil (8) und andernends an einem der Kupplungsnabe (2) zugeordneten zweiten Stützbauteil (9) abgestützt ist,
- und aufweisend eine Anschlageinrichtung (10), mittels derer die Nabenseite (N) und die Flanschseite (F) - bei Erreichen eines festgelegten maximalen Verdrehwinkels zwischen der Nabenseite (N) und der Flanschseite (F) - in Umfangsrichtung formschlüssig drehmomentübertragend gegeneinander abgestützt sind,
- **dadurch gekennzeichnet, dass** die Anschlageinrichtung (10) wenigstens ein einstückig mit dem ersten Stützbauteil (8) ausgebildetes erstes Formschlusselement (12) und wenigstens ein einstückig mit dem zweiten Stützbauteil (9) ausgebildetes zweites Formschlusselement (13) aufweist, wobei das erste Formschlusselement (12) und das zweite Formschlusselement (13) bei Erreichen des maximalen Verdrehwinkels formschlüssig zusammenwirken.

2. Kupplungsvorrichtung (1) nach Anspruch 1, **dadurch gekennzeichnet, dass** das erste Stützbauteil und/oder das zweite Stützbauteil in Form eines aus Blech gefertigten Blechbauteils (8, 9) ausgebildet ist, und dass das erste Formschlusselement und/oder das zweite Formschlusselement in Form eines umgeformten Blechabschnittes (12) ausgebildet ist.

3. Kupplungsvorrichtung (1) nach Anspruch 1 oder 2, **dadurch gekennzeichnet, dass** mehrere in Umfangsrichtung beabstandet angeordnete erste Formschlusselemente (12) und mehrere in Umfangsrichtung beabstandet angeordnete zweite Formschlusselemente (13) vorgesehen sind.

4. Kupplungsvorrichtung (1) nach einem der vorhergehenden Ansprüche, **dadurch gekennzeichnet, dass** das erste Stützbauteil ein erstes Käfigblech (8) einer Käfiganordnung (8, 18) zur Halterung des wenigstens einen Federelements (7) ist, wobei das erste Käfigblech (8) an seinem Außenumfang drehmomentfest mit dem Kupplungsflansch (3) zusammengefügt ist, und dass das zweite Stützbauteil ein Stützblech (9) ist, das an seinem Innenumfang (14) drehmomentfest mit der Kupplungsnabe (2) zusammengefügt ist.

5. Kupplungsvorrichtung (1) nach Anspruch 4, **dadurch gekennzeichnet, dass** das wenigstens eine zweite Formschlusselement eine aus dem Stützblech (9) herausgetrennte axiale Öffnung (13) ist, und dass das wenigstens eine erste Formschlusselement eine in die axiale Öffnung (13) erstreckte umgebogene Lasche (12) des ersten Käfigblechs (8) ist.

6. Kupplungsvorrichtung (1) nach Anspruch 4 oder 5, **dadurch gekennzeichnet, dass** die Käfiganordnung (8, 18) ein zweites Käfigblech (18) aufweist, das auf einer dem ersten Käfigblech (8) abgewandten Seite des Stützblechs (9) angeordnet und mit wenigstens einer weiteren Lasche (12') versehen ist, die in eine weitere axiale Öffnung (13') des Stützblechs erstreckt ist.
